(19) Europäisches Patentamt
European Patent Office
Office européen des brevets

(11) EP 2 781 937 B1

(12) EUROPEAN PATENT SPECIFICATION

(45) Date of publication and mention of the grant of the patent:
**28.09.2022 Bulletin 2022/39**

(21) Application number: **14160965.1**

(22) Date of filing: **20.03.2014**

(51) International Patent Classification (IPC):
***G01V 1/36*** *(2006.01)*

(52) Cooperative Patent Classification (CPC):
**G01V 1/364;** G01V 2210/24; G01V 2210/3246

(54) **Vector-dip filtering of seismic data in the time-frequency domain**

Vektorneigungsfilterung von seismischen Daten im Zeit-Frequenzbereich

Filtrage d'inclinaison de vecteur de données sismiques dans le domaine temps-fréquence

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2013 US 201361804378 P**

(43) Date of publication of application:
**24.09.2014 Bulletin 2014/39**

(73) Proprietor: **CGG Services SAS**
**91300 Massy (FR)**

(72) Inventors:
- **De Meersman, Kristof**
  **91300 MASSY (FR)**
- **Mihoub, Majda**
  **91300 MASSY (FR)**

(74) Representative: **Ipsilon**
**Le Centralis**
**63, avenue du Général Leclerc**
**92340 Bourg-la-Reine (FR)**

(56) References cited:
**WO-A1-2007/006145 US-A1- 2012 092 961**

- **ROOHOLLAH ASKARI ET AL: "Ground roll attenuation using the S and x-f-k transforms", GEOPHYSICAL PROSPECTING, vol. 0, no. 0, 4 September 2007 (2007-09-04), pages 105-114, XP055206403, ISSN: 0016-8025, DOI: 10.1111/j.1365-2478.2007.00659.x**
- **Kristof De Meersman: "Multi-component or vector dip filtering using the S-transform", GeoConvention Integration, 6 May 2013 (2013-05-06), pages 1-6, XP055206299, Retrieved from the Internet: URL:http://www.cgg.com/technicalDocuments/cggv_0000015213.pdf [retrieved on 2015-08-05]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

Embodiments of the subject matter disclosed herein generally relate to methods and systems for seismic data processing and, more particularly, to mechanisms and techniques for removing unwanted ground roll noise from seismic data.

### BACKGROUND

Seismic data acquisition and processing techniques are used to generate a profile (image) of a geophysical structure (subsurface) of the strata underlying the land surface or seafloor. Among other things, seismic data acquisition involves the generation of acoustic waves and the collection of reflected/refracted versions of those acoustic waves to generate the image. This image does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process in the field of seismic surveying.

To provide improved images it is necessary to process data acquired during seismic surveys to remove noise from the desired seismic signal. Ground roll is a form of coherent surface wave noise which propagates along the surface of the Earth, and which is acquired as part of a land seismic survey. As will be appreciated by those skilled in the art, geophysicists have access to a multitude of tools to attenuate surface wave noise. Most of these tools exploit lateral coherency between groups of traces, i.e., so called dip filters. Examples of these dip filters include FK, FX, radon, rank reduction and any 3D extension of the aforementioned filters.

Another aspect of interest for this discussion is multicomponent seismic acquisition. One purpose of multicomponent seismic is to record and utilize both compressional (P) and shear (S) wave modes. Recording both wave modes captures more information related to rock properties. Combining observations associated with both wave modes enables more accurate estimation of key reservoir characteristics. The evolution of multi-component data has also led to the development of vector-type filters that utilize polarization properties to distinguish signal from noise using all recorded components.

Unfortunately, many of these vector-type and dip-type filtering techniques have a common problem in that they poorly handle non-stationarity, i.e., the characteristic that the statistical distribution of data gathered from a given process changes over time or frequency. For example, frequency domain filters typically do not recognize a property of seismic data that the frequency content of the seismic signal and noise changes with time. Instead, such frequency domain filters assume time domain stationarity. Further, time-domain, i.e., 'sliding window', filters typically ignore the fact that signal and noise properties change as a function of frequency. Consequently, time domain filters assume stationarity in the frequency domain.

Accordingly, it would be desirable to provide systems and methods that avoid the afore-described problems and drawbacks, and provides a filter that removes unwanted ground roll noise from seismic data and vector (multi-component) dip (multi-channel) filtering that handles non-stationarity naturally in both the time and frequency domain.

Roohollah Askari and Hamid R. Siahkoohi "Ground roll attenuation using the S and x-f-k transforms" in Geophysical Prospecting, 2008, 56, 105-114 (XP055206403) discloses utilizing the S, x-f-k and t-f-k transforms as alternatives to the Fourier transform for ground roll attenuation.

### SUMMARY

Thus some embodiments described herein provide for a filter that removes unwanted ground roll noise from seismic data and vector (multi-component) dip (multi-channel) filtering that handles non-stationarity naturally in both the time and frequency domain, although it will be appreciated that such features are not required in all embodiments.

The invention provides a method according to claim 1.

The invention also provides a system according to claim 10.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 shows various aspects of an onshore seismic data acquisition system for which data embodiments can be utilized;

Figures 2(a-c) are schematic diagrams illustrating acquired synthetic seismic data, the seismic data after being S-transformed and a local velocity estimate derived from the S-transformed data, respectively according to an embodiment;

Figures 3(a-c) are schematic diagrams illustrating a synthetic 3D 3C shot gather for vertical, radial and transverse components, respectively, according to an embodiment;

Figures 4(a-c) are schematic diagrams illustrating noise estimates for the vertical, radial and transverse data of Figures 3(a-c), respectively, according to an embodiment;

Figures 5(a-c) are schematic diagrams illustrating filtered data for the vertical, radial and transverse components, respectively, after the noise in Figures 4(a-c) is subtracted from the acquired synthetic data in Figures 3(a-c), respectively, according to an embodiment;

Figures 6(a-c) are schematic diagrams illustrating local 3C velocity estimates calculated using vector dip filters according to an embodiment;

Figure 7 is a flowchart of a method for multi-component dip filtering of noise according to an embodiment; and

Figure 8 illustrates an exemplary data processing device or system which can be used to implement the embodiments.

## DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of providing a multi-component filter that removes unwanted high amplitude dispersive noise, e.g., ground roll, mud roll (marine) and/or guided wave noise, from seismic data based on vector (multi-component) dip filtering that handles non-stationarity in both the time and frequency domain. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to embodiments, acquired seismic data is transformed into a domain which provides time-variant spectral estimates, e.g., the S-domain, and then local velocities associated with groups of traces are determined from the S-domain data. The local velocities are used to estimate noise in the acquired seismic data, which can then be removed. In order to provide some context for the subsequent embodiments which describe, among other things, a multi-component filter that removes unwanted ground roll noise from seismic data based on vector (multi-component) dip filtering that handles non-stationarity in both the time and frequency domain, consider first a seismic data acquisition process and system as will now be described with respect to Figure 1.

A configuration for achieving seismic monitoring is illustrated in Figure 1. Figure 1 shows a system 10 for the acquisition of seismic data. Those skilled in the art will appreciate that the seismic acquisition system 10 is purely illustrative and that the embodiments to be described below can be used with data collected using any type or configuration of seismic system. Therein, the system 10 includes plural receivers 12 positioned over an area 12a of a subsurface to be explored and in contact with the surface 14 of the ground. According to various embodiments, the receivers 12 are multi-component receivers. Examples of multi-component receivers include, but are not limited to, so-called 3C receivers which have transducers capable of measuring various components of elastic waves (e.g., receivers having 3-axis geophones, 3-axis accelerometers and/or hydrophones).

A number of seismic sources 16 are also placed on the surface 14 in an area 16a, in a vicinity of the area 12a of the receivers 12. A recording device 18 is connected to the plurality of receivers 12 and placed, for example, in a station-truck 20. Each source 16 may be composed of a variable number of seismic sources and may include a local controller 22. A central controller 24 may be present to coordinate the shooting times of the sources 16. A GPS system 26 may be used to time-correlate the sources 16 and the receivers 12.

With this context in mind, the discussion now turns to a method for estimating the dominant, local (i.e., in time, frequency and space) polarization and dip properties in multi-component seismic data which has been acquired by such systems. This method can then be adapted to generate a multi-component dip filter that removes the unwanted ground roll noise from the acquired data.

As a starting point, a data transform that provides time variant spectral estimates needs to be selected for this methodology. While many such transforms are available for selection, an S-transform is selected for some of these embodiments for a number of reasons. For example, the S-transform is closely related to, and could be considered the ultimate extension of, the short-time Fourier transform and the Gabor transform and shares many properties with wavelet transforms.

The main difference between the S-transform and the wavelet transform is that the wavelet transform works in scales as opposed to frequencies and does not provide absolute phase information which is desirable when designing dip filters for irregularly spatially sampled data. It should further be noted that both the Gabor transform and the S-transform use a Gaussian window to localize the spectral information but, unlike the Gabor transform, the S-transform does not use a fixed Gaussian window for all frequencies. Instead, the S-transform uses a Gaussian window that scales as a function of frequency. Accordingly, the Gaussian window used by the S-transform attempts to achieve an optimal balance between temporal and frequency resolution, which makes it desirable as the selected transform to be used in these embodiments.

One definition of the S-transform $\mathbf{S}(\tau,f)$ of a time series s(t) which can be used in these embodiments is given by:

$$\mathbf{S}(\tau,f)=\int_{-\infty}^{\infty}\frac{|f|}{\sqrt{2\pi}}e^{\left(-\frac{f^2(\tau-t)^2}{2}\right)}s(t)e^{(-2\pi ift)}dt\,. \qquad (1)$$

Those skilled in the art will appreciate that there are various extensions and modifications to the S-transform of Equation (1) which can be used in other embodiments. Therein, the scalar and the real exponent in Equation (1) define the Gaussian window and the complex exponent is the Fourier kernel. Shorter Gaussian windows are used to estimate the amplitude and phase of higher frequencies while longer Gaussian windows are used to estimate the low frequency properties of the seismic data. The S-transform is easily invertible and integrating or summing $\mathbf{S}(\tau,f)$ over the time axis will yield the Fourier spectrum ***F(f)*** of the input signal. Accordingly, in the embodiment, one way to implement filtering in the S-domain is to omit, or zero out, samples in the integration, resulting in a Fourier spectrum that is void of information from the unwanted signal. Further any time-slice of the S-transform behaves like a Fourier transform. Therefore, in principle, any FX(Y) type dip filter can be modified to handle non-stationarity by replacing the input Fourier spectrum with a time slice of the S-transform.

The S-transform is, however, one of many time-frequency transforms which can be used in these embodiments, and vector-dip filtering according to these embodiments is not limited to using an S-transform. For example, embodiments described herein could implement the vector-dip filter using a Gabor transform or any other transform that results in a time-variant spectral estimate.

As will be appreciated by those skilled in the art, dip filters in general use spectral estimates from one component to estimate dip or apparent linear moveout velocity by comparing the phase information in the spectra of a number of nearby seismic traces. Polarization filters use spectral elements from various components (typically three) to assess the polarization properties and then filter the data. Thus, dip filters use moveout estimates and polarization filters use polarization (e.g., elliptical, linear, etc.) properties to design filters that either remove or preserve portions of the recorded signal.

By way of contrast, embodiments described herein combine the concepts of dip filtering (i.e., recordings from multiple locations) and polarization filtering (i.e., recordings from multiple directions in a single location) to facilitate removal of ground roll noise which is present on more than one component and which is approximately elliptically polarized. So rather than treating each component independently, a vector dip filter according to these embodiments obtains a noise model by estimating both polarization and velocity properties of the data in a time and frequency dependent way. According to an embodiment, the vector dip filter estimates the polarization properties of the noise, but the distinction between noise and signal is made solely based on the moveout velocity properties (e.g., since ground roll has a slower velocity than the signal). According to further embodiments, such vector dip filters can be designed that removes signal with specific polarization properties or both based on polarization and moveout velocity properties.

With these considerations regarding the usage of filtering and transforms generally in mind the discussion now turns to one specific embodiment which uses the S-transform to generate a vector dip filter. Initially, a local data-matrix $\boldsymbol{D}(\mathbf{x},\mathbf{f},\tau)$ is defined. It should be noted that, in this embodiment, the local data matrix is a three row by N column matrix containing S-transform spectral estimates for a chosen time ($\tau$) and frequency ($f$) and for all three components (*r, t* and *z*) of *N* selected traces (*x*). However, this is just an example. Those skilled in the art will appreciate that any rotationally equivalent set of components can be used for the analysis and that the matrix can be a 2C or a 4C matrix wherein a hydrophone component is added for a 4C matrix. Further in the embodiment, the trace at the center of the matrix is the one for which the dominant local dip will be estimated and all N-1 other traces that make up ***D*** are selected from within a shot or receiver gather or cross spread. It should be noted in the embodiment that N is typically between 3 and 21 and the traces are selected from within the vicinity of the trace at the center, denoted by the subscript *"c."*

The embodiment operates in a polar coordinate (offset-azimuth) system such that the definition of ***D*** applies to both two dimensional and three dimensional gathers. The embodiment also assumes that traces in ***D*** are sorted by increasing offset:

$$\mathbf{D}=\begin{bmatrix}\mathbf{d}_r\\ \mathbf{d}_t\\ \mathbf{d}_z\end{bmatrix}=\begin{bmatrix}d_{r1}e^{-j\varphi_{r1}} & \cdots & d_{rc}e^{-j\varphi_{rc}} & \cdots & d_{rn}e^{-j\varphi_{rn}}\\ d_{t1}e^{-j\varphi_{t1}} & \cdots & d_{tc}e^{-j\varphi_{tc}} & \cdots & d_{tn}e^{-j\varphi_{tn}}\\ d_{z1}e^{-j\varphi_{z1}} & \cdots & d_{zc}e^{-j\varphi_{zc}} & \cdots & d_{zn}e^{-j\varphi_{zn}}\end{bmatrix}. \quad (2)$$

The last N-1 columns of matrix **"D"** are cross correlated with the first N-1 columns of matrix **"D"** to obtain:

$$\mathbf{X}=\begin{bmatrix}d_{r_1}d_{r_2}e^{-j\Delta\varphi_{r_{2,1}}} & \cdots & d_{r_{n-1}}d_{r_n}e^{-j\Delta\varphi_{r_{n,n-1}}}\\ d_{t_1}d_{t_2}e^{-j\Delta\varphi_{t_{2,1}}} & \cdots & d_{t_{n-1}}d_{t_n}e^{-j\Delta\varphi_{t_{n,n-1}}}\\ d_{z_1}d_{z_1}e^{-j\Delta\varphi_{z_{2,1}}} & \cdots & d_{z_{n-1}}d_{z_n}e^{-j\Delta\varphi_{z_{n,n-1}}}\end{bmatrix}. \quad (3)$$

It should be noted that the embodiment assumes that if surface wave noise is present then it is the dominant signal and accordingly, most of the energy (consisting of amplitude information and phase information) in ***X*** will be related to the noise. Further in if no surface waves are present then ***X*** will be dominated by velocity information from reflected energy. The phase angles $\Delta\varphi$ contain information about the velocity of the elastic waves traveling through the media associated with this data and this information can be extracted from ***X*** in various ways.

For example, to extract velocity information consider that the phase angles $\varphi_{i+1,i}$ are a function of the offset difference $\Delta x_{i+1,i}$ and the local angular wave number $k_{i+1,i}$ so that $\varphi_{i+1,l} = k_{i+1,i}\,\Delta x_{i+1,i}$. The offset differences $\Delta x_{i+1,l}$ can vary between columns of ***X***. The wave number relates to local velocity $V$ through: $V = 2\pi f k^{-1}$. Based on the foregoing, the local velocity can be recovered from the average angular wave number, which is represented by:

$$\bar{k}=\arctan\left(\frac{\sum_{r,t,z}\sum_{i}\sin(k_{i+1,1})}{\sum_{r,t,z}\sum_{i}\cos(k_{i+1,1})}\right) \quad (4)$$

A number of alternatives can be introduced into the local dip estimation method described above. For example, the definition for $\bar{k}$ above comprises three components (*r*, *t* and *z*), but the embodiment can be extended to any number of components, including conventional 1C data. Moreover, it is also possible to assign weights ($w_i$) to the sine and cosine terms in equation (4) to vary the contribution of each, e.g., if these weights are derived from the amplitude terms (*d*) for each component then this will effectively reduce the importance of the transverse component in the averaging. It is also possible to assign weights according to offset terms $\Delta x_{i+1,}$. It should further be noted in the embodiment that an appropriate weighting would be desirable based on the fact that the transverse component typically contains very little coherent signal and noise, as represented by the equation:

$$\bar{k}=\arctan\left(\frac{\sum_{r,t,z}\sum_{i}w_i\sin(k_{i+1,1})}{\sum_{r,t,z}\sum_{i}w_i\cos(k_{i+1,1})}\right) \quad (5)$$

The method for estimating local dip described above can be tested using synthetic data to graphically illustrate its results. For example, and looking now to Figures 2(a)-(c), a synthetic data example is depicted and demonstrates the ability of an embodiment to estimate local linear dip. Figure 2(a) depicts linear dips computed using a 3D shot gather with 50 meter receiver spacing and 180 meter receiver line spacing. A bandpass filter with corner frequencies of 2 Hz, 3 Hz, 7 Hz, and 9 Hz was applied. Figure 2(b) depicts the 5 Hz S-transform amplitude spectrum of the data. Figure 2(c) depicts the local (instantaneous) velocity at 5Hz derived using Equation (4) above. The data window is 9 traces long,

effectively making this a 2D receiver line estimate.. Note that, in Figure 2(c), the velocity information for 5 Hz varies with time and location. By way of contrast, in conventional 'stationary' dip filters, there would be only a single 5 Hz velocity estimate per location. So Figure 2(c) demonstrates, using synthetic data, that vector dip filters according to these embodiments can detect that the local velocity estimates are changing with time, which is non-stationary behavior, except in the circumstances of severe spatial aliasing.

Once the local velocity is known it can be used to estimate the velocity vector v through slant stacking, i.e., by multiplying the data-matrix **D** with a dip-steering vector $s_{\bar{k}}$ to obtain:

$$\mathbf{v} = \mathbf{D}\mathbf{s}_{\bar{k}} = \begin{bmatrix} d_{r1}e^{-j\varphi_{r1}} & \cdots & d_{rc}e^{-j\varphi_{rc}} & \cdots & d_{rn}e^{-j\varphi_{rn}} \\ d_{t1}e^{-j\varphi_{t1}} & \cdots & d_{tc}e^{-j\varphi_{tc}} & \cdots & d_{tn}e^{-j\varphi_{tn}} \\ d_{z1}e^{-j\varphi_{z1}} & \cdots & d_{zc}e^{-j\varphi_{zc}} & \cdots & d_{zn}e^{-j\varphi_{zn}} \end{bmatrix} \begin{bmatrix} e^{-j\bar{k}(x_1-x_c)} & \cdots & 1 & \cdots & e^{-j\bar{k}(x_n-x_c)} \end{bmatrix}^H. \quad (6)$$

$$\mathbf{v} = \begin{bmatrix} \bar{d}_{rc}e^{-j\bar{\varphi}_{rc}} \\ \bar{d}_{tc}e^{-j\bar{\varphi}_{tc}} \\ \bar{d}_{zc}e^{-j\bar{\varphi}_{zc}} \end{bmatrix}^H \quad (7)$$

It should be noted in the Equations (6) and (7) that the operator *H* denotes the Hermitian or complex conjugate transpose. Assuming there are no variations in noise amplitude with offset, then the elements in ***v*** can serve as estimates for the 3C trace at the center of **D.** Alternatively, or additionally, embodiments could also use v to estimate the local polarization properties of the estimated noise. This information is contained in the amplitude and phase differences between the components, or elements in v. Continuing with the embodiment, the amplitude $\bar{d}_{zc}$ and phase $\bar{\varphi}_{zc}$ of the element in ***v*** corresponding to the vertical component can serve as an estimate for the trace at the center of D. It should be noted in the embodiment that accommodating amplitude variations with offset is based on retaining only the phase of v and computing the least-squares estimates of the amplitudes $\bar{d}_c$ for the trace at the center. Further in the embodiment, the vertical component $\bar{d}_{zc} = d_{zc}\cos(\varphi_{zc} - \bar{k}x_{zc} - v_z)$ provides for the minimization of $|\bar{d}zce^{-j\bar{\varphi}zc} - d_{zc}e^{-j\varphi zc}|$ . It should be noted in the embodiment that this is the least squares error between the estimated and observed spectral sample. It should further be noted that similar expressions can be derived for the radial and transverse components.

Having described vector dip filters according to embodiments, note that other embodiments are also contemplated. For example, it should be noted that alternative implementations for estimating local dip (velocity) and polarization properties comprise computing the singular value decomposition (SVD) of the data matrix D, i.e., the left singular vectors can be interpreted as polarization vectors describing the amplitude and phase relationship between the components while the right singular vectors, i.e., signal vectors, can be used to obtain local velocity estimates. It should be noted in this embodiment that **X** in Equation (3) would reduce to a 1 row by n-1 column 1C vector when applied to the right singular vectors.

Further in the alternative embodiment, one advantage of using the SVD approach is that it effectively decomposes **D** into the superposition of 3 (in the case of 3C data) independent signals that can be analyzed separately as represented by the equation:

$$\mathbf{D} = \sum_{k=1}^{3} \sigma_k \mathbf{v}_k \mathbf{u}_k^H \quad (8)$$

$$\mathbf{D} = \sigma_1 \begin{bmatrix} v_{r1} \\ v_{t1} \\ v_{z1} \end{bmatrix} \begin{bmatrix} u_{11} & \cdots & u_{c1} & \cdots & u_{N1} \end{bmatrix} + \sigma_2 \begin{bmatrix} v_{r2} \\ v_{t2} \\ v_{z2} \end{bmatrix} \begin{bmatrix} u_{12} & \cdots & u_{c2} & \cdots & u_{N2} \end{bmatrix} + \ldots \quad (9)$$

where v is a unitary polarization vector, u is a unitary signal vector and $\sigma$ is a scalar. It should be noted that this would increase the ability to separate the dominant surface wave noise signal from additive reflection and random noise energy in **D.**

To test the efficacy of dip filtering using the afore-described embodiments, testing was performed by generating a synthetic 3D 3C shot gather using the same seismic system acquisition geometry as that used for Figures 2(a)-2(c).

The vertical component of the acquired synthetic data contains four P-wave reflection events (4Hz-40Hz) while the radial component contains an equal number of PS reflection events (4Hz-25Hz). Looking to Figures 3(a), 3(b) and 3(c), the embodiment models elliptically polarized dispersive ground roll (3Hz-10Hz, 500m/s - 800m/s) on the vertical and radial components and random noise is added to all three components. More specifically, Figure 3(a) illustrates the vertical component of the data which shows 4 P-wave events in the presence of coherent and random noise, Figure 3(b) shows the radial component data which has 4 PS-wave events in the presence of coherent and random noise, with the ground roll being elliptically polarized, while Figure 3(c) shows the transverse component data containing only random background noise.

Continuing with the synthetic data evaluation of Figures 3(a)-3(c), the ground roll noise estimates obtained for each component using the least squares method described above are depicted in Figures 4(a), 4(b) and 4(c), for the vertical, radial and transverse components, respectively. Even though strong three component noise was detected in this example, the polarization properties of that noise were correctly predicted by the filter designed according to these embodiments, which is evident from the lack of significant predicted noise shown in the transverse component data in Figure 4(c). For example, if the polarization had been poorly predicted by the vector dip filter, then the filter would have introduced ground roll on the filtered transverse component.

Subtracting the noise estimates depicted in Figures 4(a), 4(b) and 4(c) from the data depicted in Figures 3(a), 3(b) and 3(c) results in the filtered data depicted in Figures 5(a), 5(b) and 5(c) for the vertical, radial and transverse components. It should be noted in the filtered synthetic data that while some residual ground roll can be observed, the PP and PS reflection signal remains largely untouched. It is anticipated that the filtering could be further improved by using some form of adaptive subtraction of the noise from the signal Moreover, the residual ground roll is a direct consequence of the usage of least squares estimation of the noise, which is aimed at preserving the reflection signal at the cost of missing some portion of the coherent noise.

Looking now to Figures 6(a)-6(c), the local dominant velocity estimates that were used by the filter to estimate the noise in the dip filtering example above are depicted for frequencies of 5Hz, 7Hz and 9Hz, respectively The velocities range between 200m/s and 1100m/s, and are denoted in the graphs by differences in shading. It should be noted that, as will be appreciated by those skilled in the art, comparing velocities from different frequencies clearly shows the dispersive nature of the coherent noise.

From the foregoing, it will be appreciated that dip filtering embodiments can also be expressed as methods including one or more steps. Some examples will now be provided. Looking now to Figure 7, a method embodiment 700 for filtering noise from acquired seismic data is illustrated. Therein, the acquired seismic data associated with a plurality of traces is transformed into time-variant, e.g., S-transform, spectral estimates, e.g., using equation (1) above, at step 702. A local velocity associated with the plurality of traces is extracted from the time variant spectral estimates at step 704. An amplitude and a phase associated with one of the plurality of traces, e.g., the center trace, is calculated using the local velocity at step 706. The noise is determined at step 708 based on the amplitude and phase, and is then subtracted or separated from the acquired seismic data at step 710

The computing device(s) or other network nodes involved in multi-component dip filtering of ground roll noise as set forth in the above described embodiments may be any type of computing device capable of processing and communicating seismic data associated with a seismic survey. An example of a representative computing system capable of carrying out operations in accordance with these embodiments is illustrated in Figure 8. System 200 includes, among other items, server 201, source/receiver interface 202, internal data/communications bus (bus) 204, processor(s) 208 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 210, compact disk (CD)/digital video disk (DVD) read/write (R/W) drive 212, floppy diskette drive 214 (though less used currently, many servers still include this device), and data storage unit 232.

Data storage unit 232 itself can comprise hard disk drive (HDD) 216 (these can include conventional magnetic storage media, but, as is becoming increasingly more prevalent, can include flash drive-type mass storage devices 224, among other types), ROM device(s) 218 (these can include electrically erasable (EE) programmable ROM (EEPROM) devices, ultra-violet erasable PROM devices (UVPROMs), among other types), and random access memory (RAM) devices 220. Usable with USB port 210 is flash drive device 224, and usable with CD/DVD R/W device 212 are CD/DVD disks 234 (which can be both read and write-able). Usable with diskette drive device 214 are floppy diskettes 237. Each of the memory storage devices, or the memory storage media (216, 218, 220, 224, 234, and 237, among other types), can contain parts or components, or in its entirety, executable software programming code (software) 236 that can implement part or all of the portions of the method described herein. Further, processor 208 itself can contain one or different types of memory storage devices (most probably, but not in a limiting manner, RAM memory storage media 220) that can store all or some of the components of software 236.

In addition to the above described components, system 200 also comprises user console 234, which can include

keyboard 228, display 226, and mouse 230. All of these components are known to those of ordinary skill in the art, and this description includes all known and future variants of these types of devices. Display 226 can be any type of known display or presentation screen, such as liquid crystal displays (LCDs), light emitting diode displays (LEDs), plasma displays, cathode ray tubes (CRTs), among others. User console 235 can include one or more user interface mechanisms such as a mouse, keyboard, microphone, touch pad, touch screen, voice-recognition system, among other inter-active inter-communicative devices.

User console 234, and its components if separately provided, interface with server 201 via server input/output (I/O) interface 222, which can be an RS232, Ethernet, USB or other type of communications port, or can include all or some of these, and further includes any other type of communications means, presently known or further developed. System 200 can further include communications satellite/global positioning system (GPS) transceiver device 238, to which is electrically connected at least one antenna 240 (according to an exemplary embodiment, there would be at least one GPS receive-only antenna, and at least one separate satellite bi-directional communications antenna). System 200 can access internet 242, either through a hard wired connection, via I/O interface 222 directly, or wirelessly via antenna 240, and transceiver 238.

Server 201 can be coupled to other computing devices, such as those that operate or control the equipment of ship 2, via one or more networks. Server 201 may be part of a larger network configuration as in a global area network (GAN) (e.g., internet 242), which ultimately allows connection to various landlines.

According to a further exemplary embodiment, system 200, being designed for use in seismic exploration, will interface with one or more eceivers 12. As further previously discussed, receivers 12 can communicate with server 201 either through an electrical cable or via a wireless system that can communicate via antenna 240 and transceiver 238 (collectively described as communications conduit 246).

According to further exemplary embodiments, user console 235 provides a means for personnel to enter commands and configuration into system 200 (e.g., via a keyboard, buttons, switches, touch screen and/or joy stick). Display device 226 can be used to show: source/receiver position; visual representations of acquired data; source and receiver status information; survey information; and other information important to the seismic data acquisition process. Source and receiver interface unit 202 can receive the seismic data from receivers 12 through communication conduit 248 (discussed above). Source and receiver interface unit 202 can also communicate bi-directionally with sources through the communication conduit 248. Excitation signals, control signals, output signals and status information related to the source can be exchanged by communication conduit 248 between system 200 and the sources.

Bus 204 allows a data pathway for items such as: the transfer and storage of data that originate from either the source sensors or receivers; for processor 208 to access stored data contained in data storage unit memory 232; for processor 208 to send information for visual display to display 226; or for the user to send commands to system operating programs/software 236 that might reside in either the processor 208 or the source and receiver interface unit 202.

System 200 can be used to implement the methods described above associated with dip filtering of ground roll noise according to an exemplary embodiment. Hardware, firmware, software or a combination thereof may be used to perform the various steps and operations described herein. According to an exemplary embodiment, software 236 for carrying out the above discussed steps can be stored and distributed on multi-media storage devices such as devices 216, 218, 220, 224, 234, and/or 237 (described above) or other form of media capable of portably storing information (e.g., universal serial bus (USB) flash drive 224). These storage media may be inserted into, and read by, devices such as the CD-ROM drive 212, the disk drive 214, among other types of software storage devices.

The disclosed exemplary embodiments provide a server node, and a method for multi-component dip filtering of ground roll noise associated with seismic depth images. It should be understood that this description is not intended to limit the invention, the scope of which is defined by the appended claims.

Further, in the detailed description of the exemplary embodiments, numerous specific details are set forth in order to provide a comprehensive understanding of the invention. However, one skilled in the art would understand that various embodiments may be practiced without such specific details.

The methods or flow charts provided in the present application may be implemented in a computer program, software, or firmware tangibly embodied in a computer-readable storage medium for execution by a general purpose computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art.

## Claims

1. A computer-implemented method for filtering at least high amplitude dispersive noise from seismic data acquired over an area of a subsurface by combining dip filtering and polarization filtering so as to obtain filtered data, comprising:

    transforming (702) said acquired seismic data associated with a plurality of traces into time-variant spectral estimates;
    extracting (704) a local velocity associated with the plurality of traces from the time-variant spectral estimates, by recovering said local velocity from an average angular wave number;
    calculating (706) an amplitude and a phase associated with one of the plurality of traces using the local velocity;
    determining (708) the noise based on the amplitude and phase;
    subtracting (710) the determined noise from the acquired seismic data in order to obtain said filtered data; and generating an image of the subsurface by using said filtered data.

2. The method of claim 1, further comprising:
generating a first local data matrix having the time-variant spectral estimates which comprise a plurality of S-transform spectral estimates which are associated with the plurality of traces at a particular time and frequency.

3. The method of claim 2, further comprising:
generating a second local data matrix by cross correlating a first subset of columns, comprising all of the columns except the last column of said local data matrix, with a second subset of columns, comprising all of the columns except the first column, of said local data matrix.

4. The method of claim 1, wherein said plurality of selected seismic traces comprises traces from a single shot, a single receiver gather and a single cross spread.

5. The method of claim 4, wherein said receiver gathers are two-dimensional gathers.

6. The method of claim 4, wherein said receiver gathers are three-dimensional gathers.

7. The method of claim 2, wherein said first local data matrix is:

$$\mathbf{D} = \begin{bmatrix} \mathbf{d}_r \\ \mathbf{d}_t \\ \mathbf{d}_z \end{bmatrix} = \begin{bmatrix} d_{r1}e^{-j\varphi_{r1}} & \cdots & d_{rc}e^{-j\varphi_{rc}} & \cdots & d_{rn}e^{-j\varphi_{rn}} \\ d_{t1}e^{-j\varphi_{t1}} & \cdots & d_{tc}e^{-j\varphi_{tc}} & \cdots & d_{tn}e^{-j\varphi_{tn}} \\ d_{z1}e^{-j\varphi_{z1}} & \cdots & d_{zc}e^{-j\varphi_{zc}} & \cdots & d_{zn}e^{-j\varphi_{zn}} \end{bmatrix}.$$

where elements d in the matrix D are S-transform spectral estimates for a chosen time ($\tau$) and frequency ($f$) and for all three components ($r$, $t$ and $z$) of N selected traces (x)

8. The method of claim 3, wherein said second local data matrix is:

$$\mathbf{X} = \begin{bmatrix} d_{r_1}d_{r_2}e^{-j\Delta\varphi_{r2,1}} & \cdots & d_{r_{n-1}}d_{r_n}e^{-j\Delta\varphi_{r_n,n-1}} \\ d_{t_1}d_{t_2}e^{-j\Delta\varphi_{t2,1}} & \cdots & d_{t_{n-1}}d_{t_n}e^{-j\Delta\varphi_{t_n,n-1}} \\ d_{z_1}d_{z_1}e^{-j\Delta\varphi_{z2,1}} & \cdots & d_{z_{n-1}}d_{z_n}e^{-j\Delta\varphi_{z_n,n-1}} \end{bmatrix}$$

where elements d in the matrix X are S-transform spectral estimates for a chosen time ($\tau$) and frequency ($f$) and for all three components ($r$, $t$ and z) of N selected traces (x).

9. The method of claim 1, wherein the acquired seismic data is any one of: one component data, three component

data or more than three component data.

**10.** A system for filtering at least high amplitude dispersive noise from seismic data acquired over an area of a subsurface by combining dip filtering and polarization filtering so as to obtain filtered data, comprising: one or more processors (208) configured to transform (702) said acquired seismic data associated with a plurality of traces into time-variant spectral estimates, to extract (704) a local velocity associated with the plurality of traces from the time-variant spectral estimates, by recovering said local velocity from an average angular wave number; to calculate (706) an amplitude and a phase associated with one of the plurality of traces using the local velocity, to determine (708) the noise based on the amplitude and phase; to subtract (710) the determined noise from the acquired seismic data in order to obtain said filtered data, and to generate an image of the subsurface by using said filtered data.

**11.** The system of claim 10, wherein the one or more processors is further configured to generate a first local data matrix having the time-variant spectral estimates which comprise a plurality of S-transform spectral estimates which are associated with the plurality of traces at a particular time and frequency.

**12.** The system of claim 11, wherein the one or more processors is further configured to: generate a second local data matrix by cross correlating a first subset of columns, comprising all of the columns except the last column of said local data matrix, with a second subset of columns, comprising all of the columns except the first column, of said local data matrix.

**13.** The system of claim 10, wherein said plurality of selected seismic traces comprises traces from a single shot, a single receiver gather and a single cross spread.

**14.** The system of claim 13, wherein said receiver gathers are two-dimensional gathers.

**Patentansprüche**

**1.** Ein computerimplementiertes Verfahren zum Filtern mindestens von dispersivem Rauschen hoher Amplitude aus seismischen Daten, die über einen Bereich eines Untergrundes erfasst werden, durch Kombinieren von Dip-Filtern und Polarisationsfiltern, um gefilterte Daten zu gewinnen, umfassend:

Transformieren (702) der erfassten seismischen Daten, die einer Mehrzahl von Spuren zugeordnet sind, in zeitvariante spektrale Schätzwerte,
Extrahieren (704) einer lokalen Geschwindigkeit, die der Mehrzahl von Spuren zugeordnet ist, aus den zeitvarianten spektralen Schätzwerten durch Rückgewinnen der lokalen Geschwindigkeit aus einer durchschnittlichen Kreiswellenzahl,
Berechnen (706) einer Amplitude und einer Phase, die einer der Mehrzahl von Spuren zugeordnet ist, unter Verwendung der lokalen Geschwindigkeit,
Bestimmen (708) des Rauschens basierend auf der Amplitude und Phase,
Subtrahieren (710) des bestimmten Rauschens aus den erfassten seismischen Daten, um die gefilterten Daten zu gewinnen, und
Erzeugen eines Bildes des Untergrundes unter Verwendung der gefilterten Daten.

**2.** Verfahren nach Anspruch 1, ferner umfassend:
Erzeugen einer ersten Matrix lokaler Daten, die die zeitvarianten spektralen Schätzwerte aufweist, welche eine Mehrzahl von S-transformierten spektralen Schätzwerten, die der Mehrzahl von Spuren zu einer bestimmten Zeit und Frequenz zugeordnet sind.

**3.** Verfahren nach Anspruch 2, ferner umfassend:
Erzeugen einer zweiten Matrix lokaler Daten durch Kreuzkorrelieren einer ersten Teilmenge von Spalten, die alle Spalten außer der letzten Spalte der Matrix lokaler Daten umfasst, mit einer zweiten Teilmenge von Spalten, die alle Spalten außer der ersten Spalte der Matrix lokaler Daten umfasst.

**4.** Verfahren nach Anspruch 1, wobei die Mehrzahl von ausgewählten seismischen Spuren Spuren von einem einzelnen Schuss, einer Spurengruppe mit einzelnem Empfänger (Single Receiver Gather) und einer einzelnen Kreuzaufstellung (Single Cross Gather) umfasst.

**5.** Verfahren nach Anspruch 4, wobei die Empfänger-Spurengruppen zweidimensionale Spurengruppen sind.

**6.** Verfahren nach Anspruch 4, wobei die Empfänger-Spurengruppen dreidimensionale Spurengruppen sind.

**7.** Verfahren nach Anspruch 2, wobei die erste Matrix lokaler Daten lautet:

$$\mathbf{D}=\begin{bmatrix}\mathbf{d}_r\\ \mathbf{d}_t\\ \mathbf{d}_z\end{bmatrix}=\begin{bmatrix} d_{r1}e^{-j\varphi_{r1}} & \cdots & d_{rc}e^{-j\varphi_{rc}} & \cdots & d_{rn}e^{-j\varphi_{rn}} \\ d_{t1}e^{-j\varphi_{t1}} & \cdots & d_{tc}e^{-j\varphi_{tc}} & \cdots & d_{tn}e^{-j\varphi_{tn}} \\ d_{z1}e^{-j\varphi_{z1}} & \cdots & d_{zc}e^{-j\varphi_{zc}} & \cdots & d_{zn}e^{-j\varphi_{zn}} \end{bmatrix}.$$

wobei die Elemente d in der Matrix D S-transformierte spektrale Schätzwerte für eine gegebene Zeit ($\tau$) und Frequenz (f) und für alle drei Komponenten (r, t und z) von N ausgewählten Spuren (x) sind.

**8.** Verfahren nach Anspruch 3, wobei die zweite Matrix lokaler Daten lautet:

$$\mathbf{X}=\begin{bmatrix} d_{r_1}d_{r_2}e^{-j\Delta\varphi_{r_{2,1}}} & \cdots & d_{r_{n-1}}d_{r_n}e^{-j\Delta\varphi_{r_{n,n-1}}} \\ d_{t_1}d_{t_2}e^{-j\Delta\varphi_{t_{2,1}}} & \cdots & d_{t_{n-1}}d_{t_n}e^{-j\Delta\varphi_{t_{n,n-1}}} \\ d_{z_1}d_{z_1}e^{-j\Delta\varphi_{z_{2,1}}} & \cdots & d_{z_{n-1}}d_{z_n}e^{-j\Delta\varphi_{z_{n,n-1}}} \end{bmatrix}$$

wobei die Elemente d in der Matrix X S-transformierte spektrale Schätzwerte für eine gegebene Zeit ($\tau$) und Frequenz (f) und für alle drei Komponenten (r, t und z) von N ausgewählten Spuren (x) sind.

**9.** Verfahren nach Anspruch 1, wobei die erfassten seismischen Daten eines der Folgenden sind: Ein-Komponenten-Daten, Drei-Komponenten-Daten und Daten mit mehr als drei Komponenten.

**10.** System zum Filtern mindestens von dispersivem Rauschen hoher Amplitude aus seismischen Daten, die über einen Bereich eines Untergrundes erfasst werden, durch Kombinieren von Dip-Filtern und Polarisationsfiltern, um gefilterte Daten zu gewinnen, umfassend:
einen oder mehrere Prozessoren (208), konfiguriert zum Transformieren (702) der erfassten seismischen Daten, die einer Mehrzahl von Spuren zugeordnet sind, in zeitvariante spektrale Schätzwerte, Extrahieren (704) einer lokalen Geschwindigkeit, die der Mehrzahl von Spuren zugeordnet ist, aus den zeitvarianten spektralen Schätzwerten durch Rückgewinnen der lokalen Geschwindigkeit aus einer durchschnittlichen Kreiswellenzahl, Berechnen (706) einer Amplitude und einer Phase, die einer der Mehrzahl von Spuren zugeordnet ist, unter Verwendung der lokalen Geschwindigkeit, Bestimmen (708) des Rauschens basierend auf der Amplitude und Phase, Subtrahieren (710) des bestimmten Rauschens aus den erfassten seismischen Daten, um die gefilterten Daten zu gewinnen, und Erzeugen eines Bildes des Untergrundes unter Verwendung der gefilterten Daten.

**11.** System nach Anspruch 10, wobei der eine oder die mehreren Prozessoren ferner konfiguriert ist/sind zum Erzeugen einer ersten Matrix lokaler Daten, die die zeitvarianten spektralen Schätzwerte aufweist, welche eine Mehrzahl von S-transformierten spektralen Schätzwerten, die der Mehrzahl von Spuren zu einer bestimmten Zeit und Frequenz zugeordnet sind.

**12.** System nach Anspruch 11, wobei der eine oder die mehreren Prozessoren ferner konfiguriert ist/sind zum Erzeugen einer zweiten Matrix lokaler Daten durch Kreuzkorrelieren einer ersten Teilmenge von Spalten, die alle Spalten außer der letzten Spalte der Matrix lokaler Daten umfasst, mit einer zweiten Teilmenge von Spalten, die alle Spalten außer der ersten Spalte der Matrix lokaler Daten umfasst.

**13.** System nach Anspruch 10, wobei die Mehrzahl von ausgewählten seismischen Spuren Spuren von einem einzelnen Schuss, einer Spurengruppe mit einzelnem Empfänger (Single Receiver Gather) und einer einzelnen Kreuzaufstellung (Single Cross Gather) umfasst.

**14.** System nach Anspruch 13, wobei die Empfänger-Spurengruppen zweidimensionale Spurengruppen sind.

## Revendications

**1.** Procédé mis en œuvre par ordinateur, pour filtrer au moins du bruit dispersif de haute amplitude à partir de données sismiques acquises sur une zone d'une subsurface, en combinant un filtrage d'inclinaison et un filtrage de polarisation, de manière à obtenir des données filtrées, le procédé comprenant les étapes ci-dessous consistant à :

transformer (702) lesdites données sismiques acquises, associées à une pluralité de traces, en des estimations spectrales instationnaires ;
extraire (704) une vitesse locale, associée à la pluralité de traces, des estimations spectrales instationnaires, en rétablissant ladite vitesse locale à partir d'un nombre d'onde angulaire moyen ;
calculer (706) une amplitude et une phase associées à l'une de la pluralité de traces, en utilisant la vitesse locale ;
déterminer (708) le bruit, sur la base de l'amplitude et de la phase ;
soustraire (710) le bruit déterminé des données sismiques acquises, en vue d'obtenir lesdites données filtrées ; et
générer une image de la subsurface, en utilisant lesdites données filtrées.

**2.** Procédé selon la revendication 1, comprenant en outre l'étape ci-dessous consistant à :
générer une première matrice de données locale présentant les estimations spectrales instationnaires qui comprennent une pluralité d'estimations spectrales de transformée en S lesquelles sont associées à la pluralité de traces, à un temps et une fréquence particuliers.

**3.** Procédé selon la revendication 2, comprenant en outre l'étape ci-dessous consistant à :
générer une seconde matrice de données locale en mettant en œuvre une corrélation croisée d'un premier sous-ensemble de colonnes, comprenant toutes les colonnes hormis la dernière colonne de ladite matrice de données locale, avec un second sous-ensemble de colonnes, comprenant toutes les colonnes hormis la première colonne, de ladite matrice de données locale.

**4.** Procédé selon la revendication 1, dans lequel ladite pluralité de traces sismiques sélectionnées comprend des traces provenant d'un tir unique, d'une unique collecte de récepteurs et d'un unique tir en croix.

**5.** Procédé selon la revendication 4, dans lequel lesdites collectes de récepteurs sont des collectes bidimensionnelles.

**6.** Procédé selon la revendication 4, dans lequel lesdites collectes de récepteurs sont des collectes tridimensionnelles.

**7.** Procédé selon la revendication 2, dans lequel ladite première matrice de données locale est comme suit :

$$\mathbf{D}=\begin{bmatrix}\mathbf{d}_r\\ \mathbf{d}_t\\ \mathbf{d}_z\end{bmatrix}=\begin{bmatrix} d_{r1}e^{-j\varphi_{r1}} & \cdots & d_{rc}e^{-j\varphi_{rc}} & \cdots & d_{rn}e^{-j\varphi_{rn}}\\ d_{t1}e^{-j\varphi_{t1}} & \cdots & d_{tc}e^{-j\varphi_{tc}} & \cdots & d_{tn}e^{-j\varphi_{tn}}\\ d_{z1}e^{-j\varphi_{z1}} & \cdots & d_{zc}e^{-j\varphi_{zc}} & \cdots & d_{zn}e^{-j\varphi_{zn}}\end{bmatrix}.$$

où les éléments « d » de la matrice D sont des estimations spectrales de transformée en S pour un temps ($\tau$) et une fréquence (*f*) choisis, et pour les trois composantes (r, *t* et *z*) de N traces (x) sélectionnées.

**8.** Procédé selon la revendication 3, dans lequel ladite seconde matrice de données locale est comme suit :

$$\mathbf{X} = \begin{bmatrix} d_{r_1} d_{r_2} e^{-j\Delta\varphi_{r_{2,1}}} & \cdots & d_{r_{n-1}} d_{r_n} e^{-j\Delta\varphi_{r_{n,n-1}}} \\ d_{t_1} d_{t_2} e^{-j\Delta\varphi_{t_{2,1}}} & \cdots & d_{t_{n-1}} d_{t_n} e^{-j\Delta\varphi_{t_{n,n-1}}} \\ d_{z_1} d_{z_1} e^{-j\Delta\varphi_{z_{2,1}}} & \cdots & d_{z_{n-1}} d_{z_n} e^{-j\Delta\varphi_{z_{n,n-1}}} \end{bmatrix}$$

où les éléments « d » de la matrice X sont des estimations spectrales de transformée en S pour un temps ($\tau$) et une fréquence (*f*) choisis, et pour les trois composantes (r, *t* et *z*) de N traces (x) sélectionnées.

**9.** Procédé selon la revendication 1, dans lequel les données sismiques acquises correspondent à l'une quelconque parmi : des données à une composante, des données à trois composantes ou données à plus de trois composantes.

**10.** Système destiné à filtrer au moins du bruit dispersif de haute amplitude à partir de données sismiques acquises sur une zone d'une subsurface, en combinant un filtrage d'inclinaison et un filtrage de polarisation de manière à obtenir des données filtrées, le système comprenant :
un ou plusieurs processeurs (208) configurés de manière à transformer (702) lesdites données sismiques acquises associées à une pluralité de traces, en des estimations spectrales instationnaires, à extraire (704) une vitesse locale, associée à la pluralité de traces, des estimations spectrales instationnaires, en rétablissant ladite vitesse locale à partir d'un nombre d'onde angulaire moyen, à calculer (706) une amplitude et une phase associées à l'une de la pluralité de traces en utilisant la vitesse locale, à déterminer (708) le bruit sur la base de l'amplitude et de la phase, à soustraire (710) le bruit déterminé des données sismiques acquises en vue d'obtenir lesdites données filtrées, et à générer une image de la subsurface en utilisant lesdites données filtrées.

**11.** Système selon la revendication 10, dans lequel ledit un ou lesdits plusieurs processeurs sont en outre configurés de manière à générer une première matrice de données locale présentant les estimations spectrales instationnaires qui comprennent une pluralité d'estimations spectrales de transformée en S lesquelles sont associées à la pluralité de traces, à un temps et une fréquence particuliers.

**12.** Système selon la revendication 11, dans lequel ledit un ou lesdits plusieurs processeurs sont en outre configurés de manière à générer une seconde matrice de données locale en mettant en œuvre une corrélation croisée d'un premier sous-ensemble de colonnes, comprenant toutes les colonnes hormis la dernière colonne de ladite matrice de données locale, avec un second sous-ensemble de colonnes, comprenant toutes les colonnes hormis la première colonne, de ladite matrice de données locale.

**13.** Système selon la revendication 10, dans lequel ladite pluralité de traces sismiques sélectionnées comprend des traces provenant d'un tir unique, d'une unique collecte de récepteurs et d'un unique tir en croix.

**14.** Système selon la revendication 13, dans lequel lesdites collectes de récepteurs sont des collectes bidimensionnelles.

FIG. 1
(Background Art)

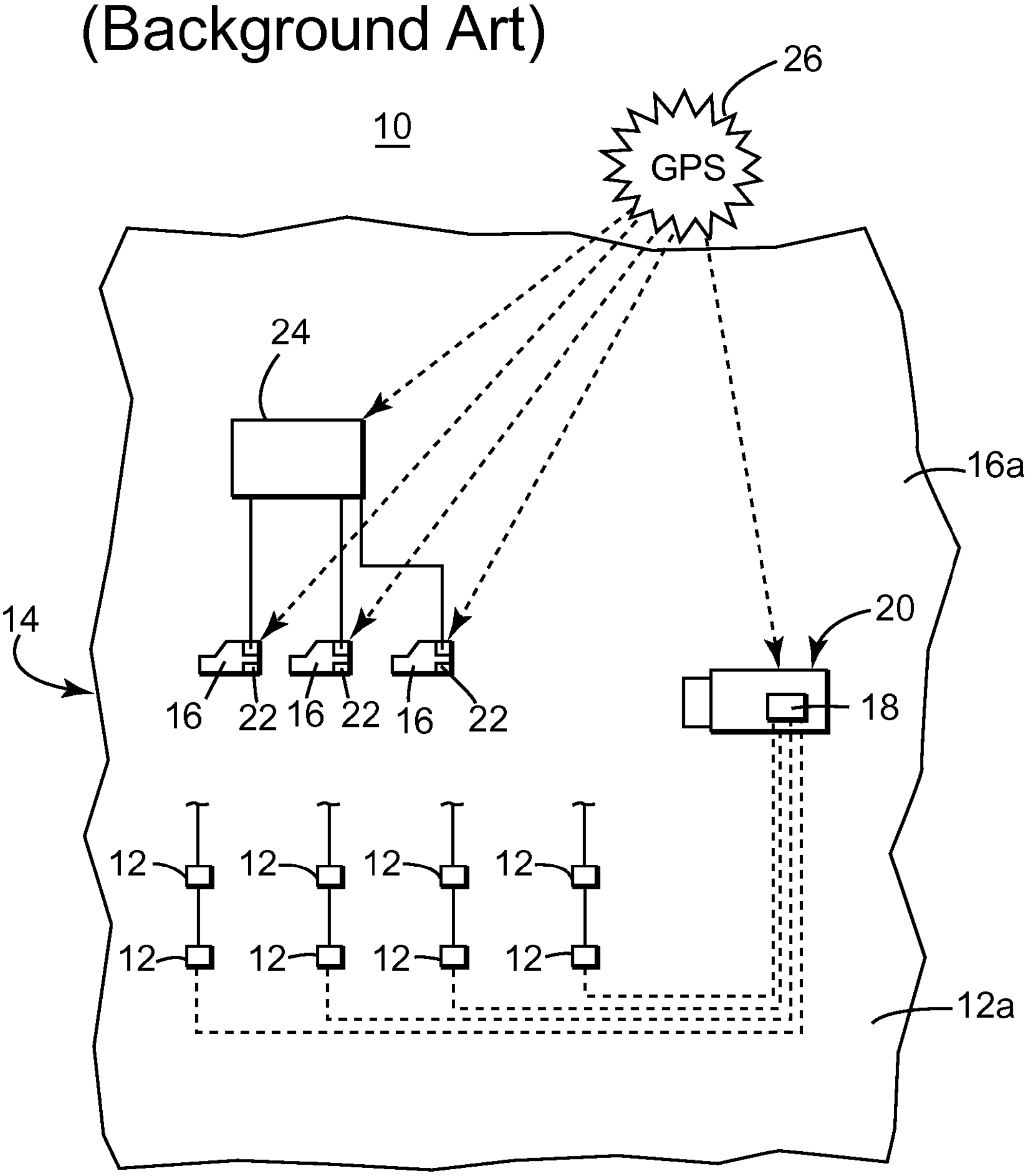

FIG. 2(a)

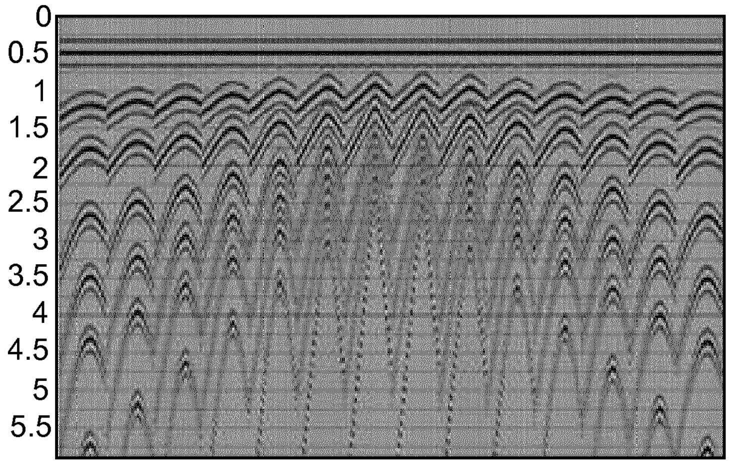


FIG. 2(b)

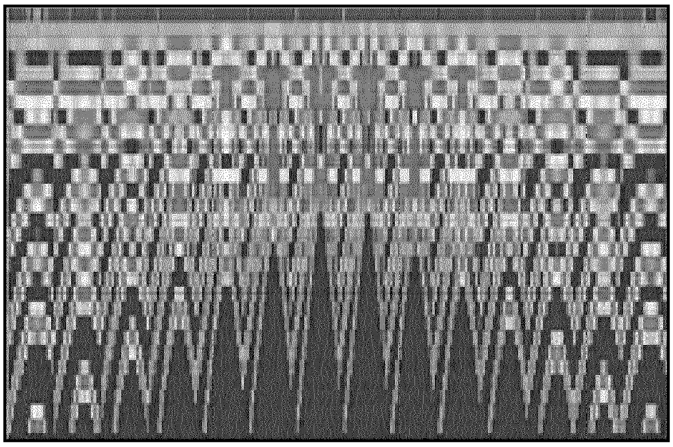

FIG. 2(c)

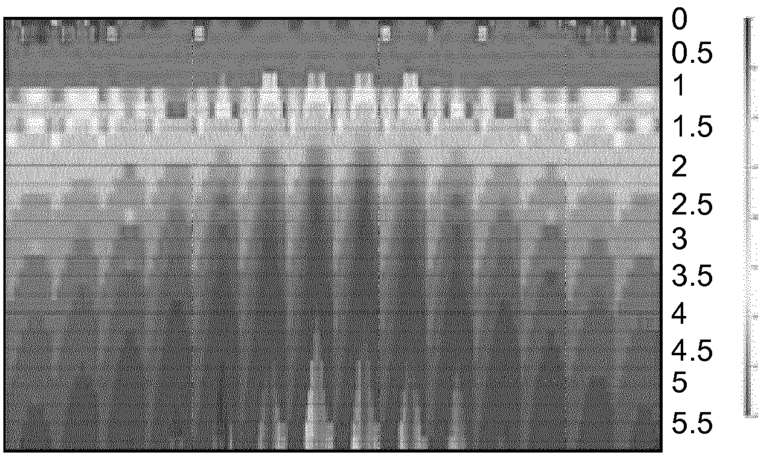

FIG. 3(a)

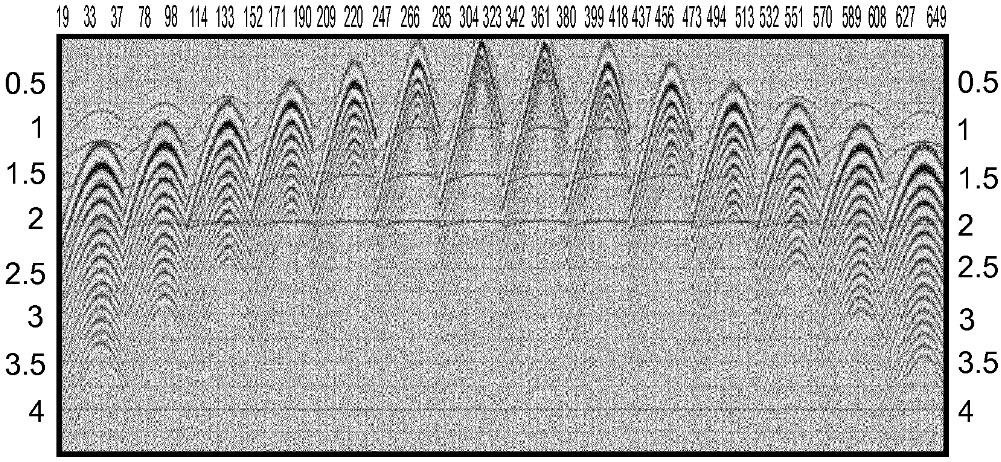


FIG. 3(b)

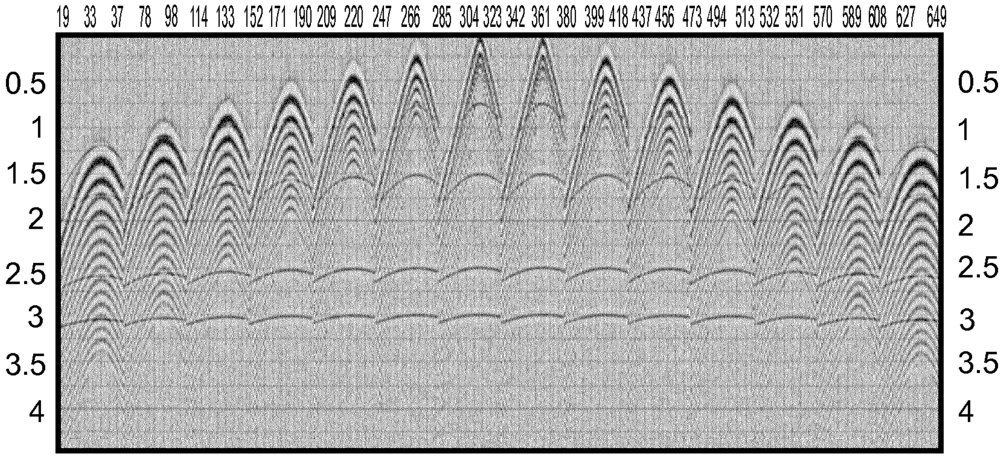


FIG. 3(c)

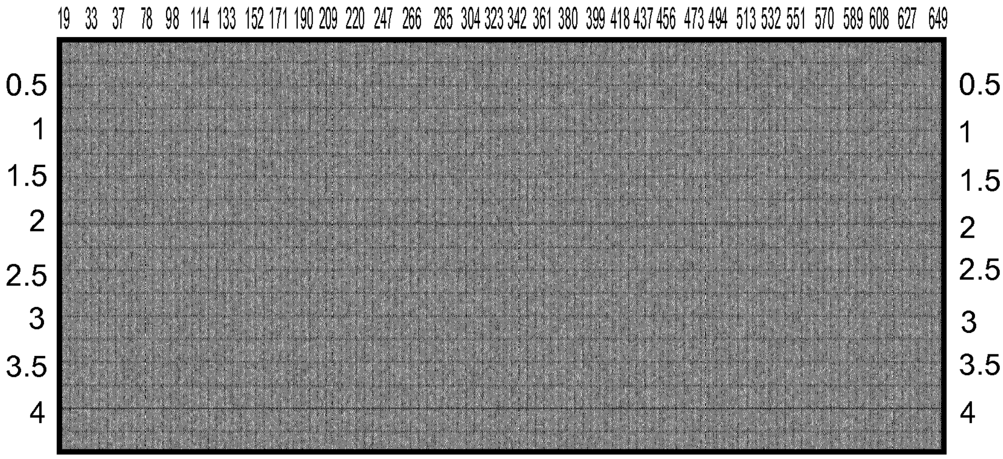

FIG. 4(a)

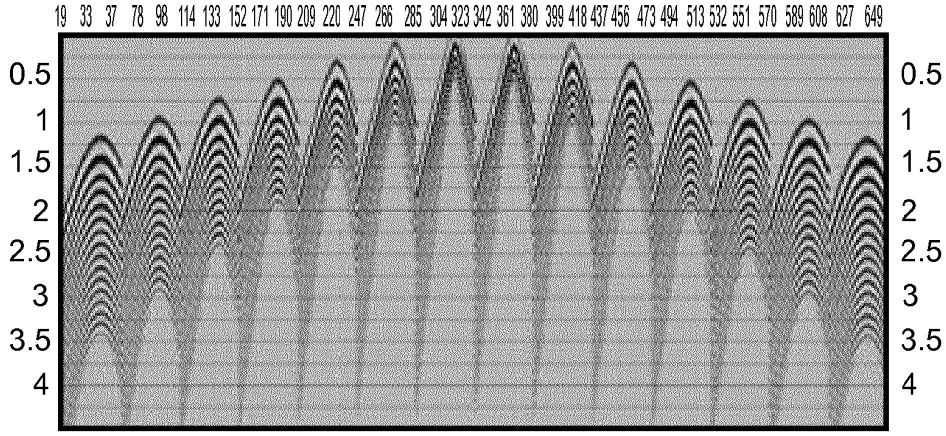


FIG. 4(b)

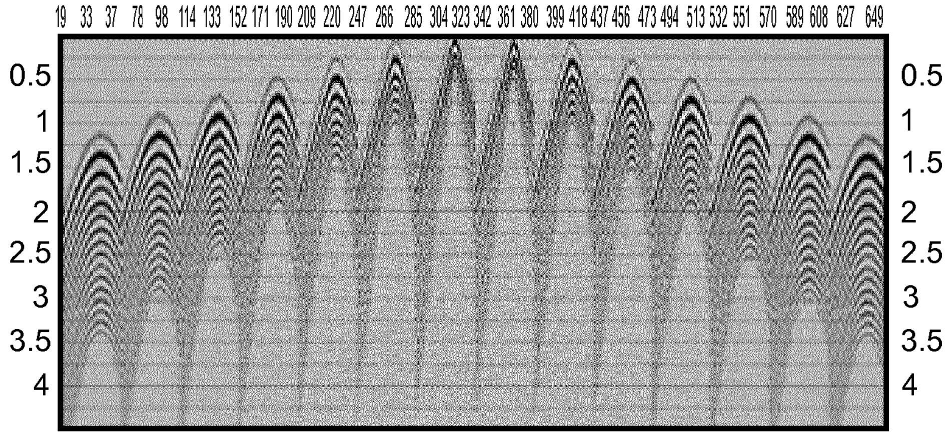


FIG. 4(c)

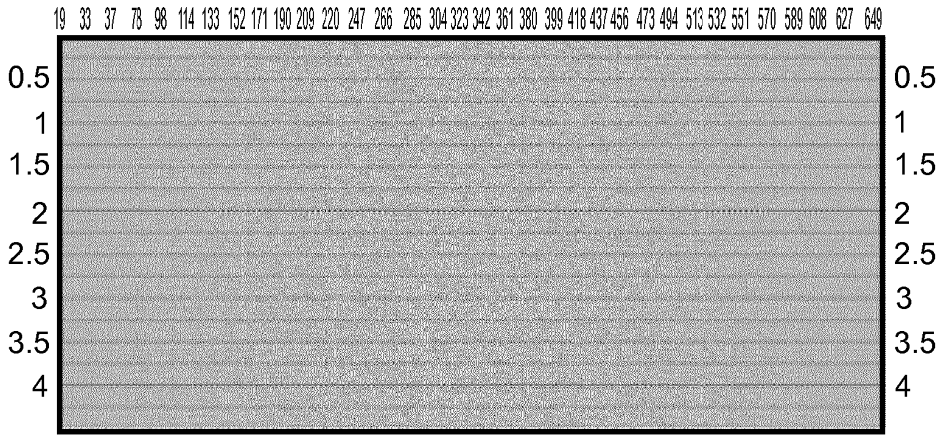

FIG. 5(a)

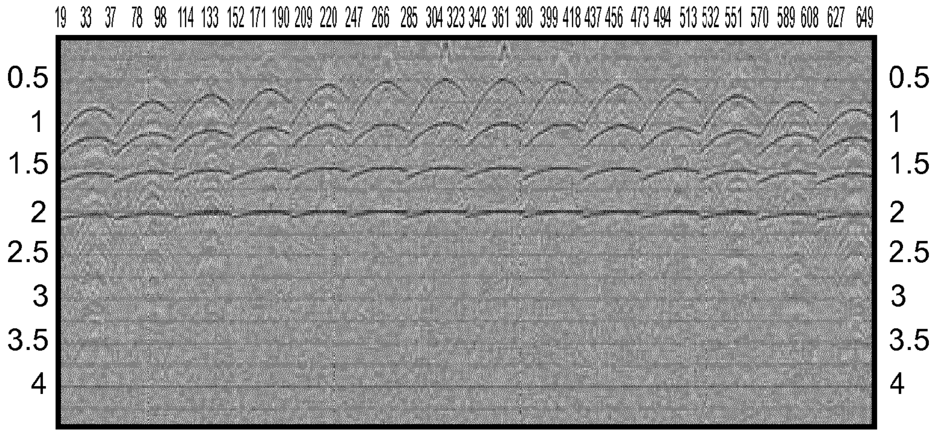


FIG. 5(b)

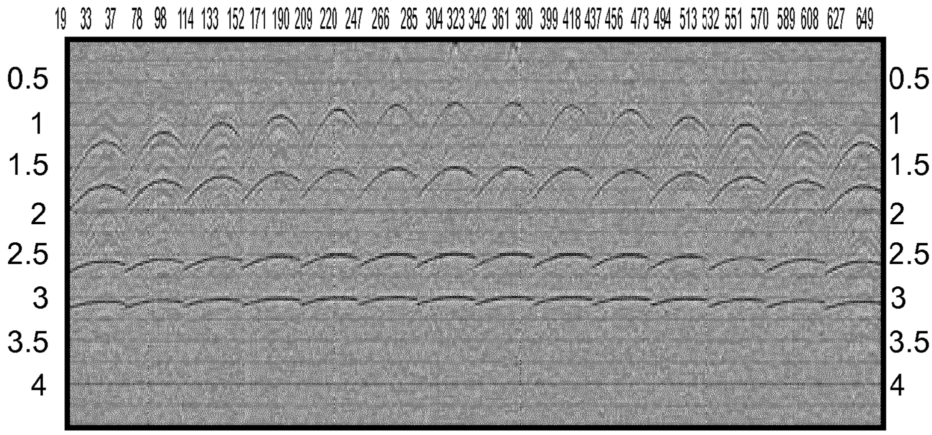


FIG. 5(c)

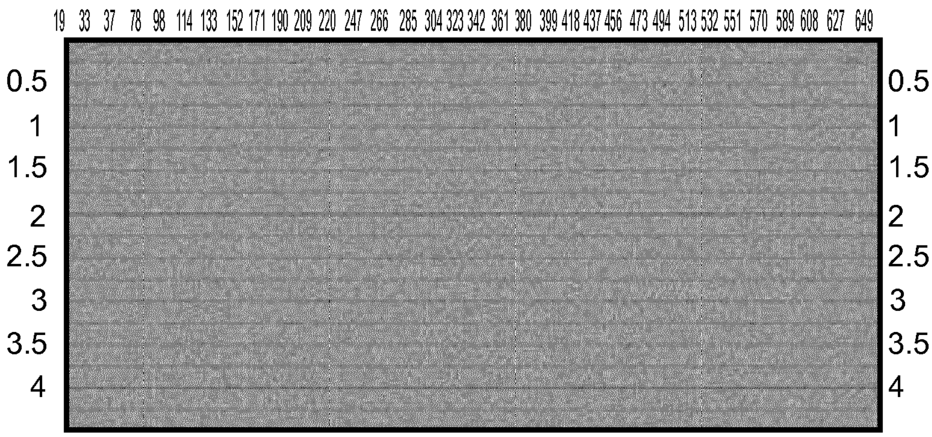

FIG. 6(a)

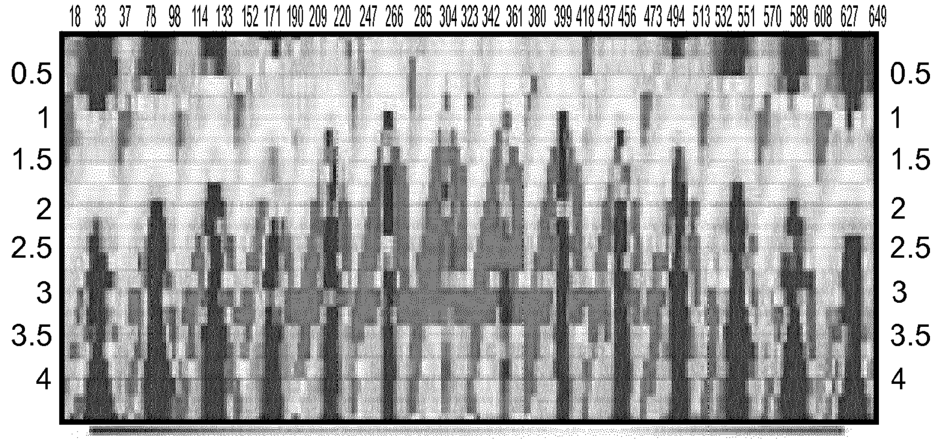


FIG. 6(b)

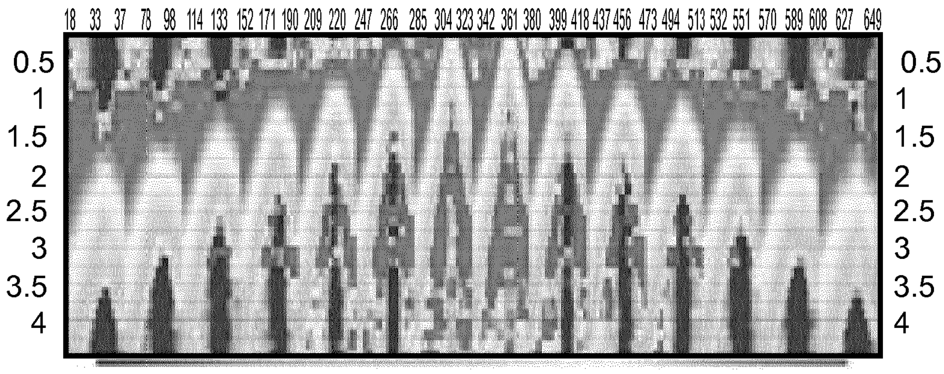


FIG. 6(c)

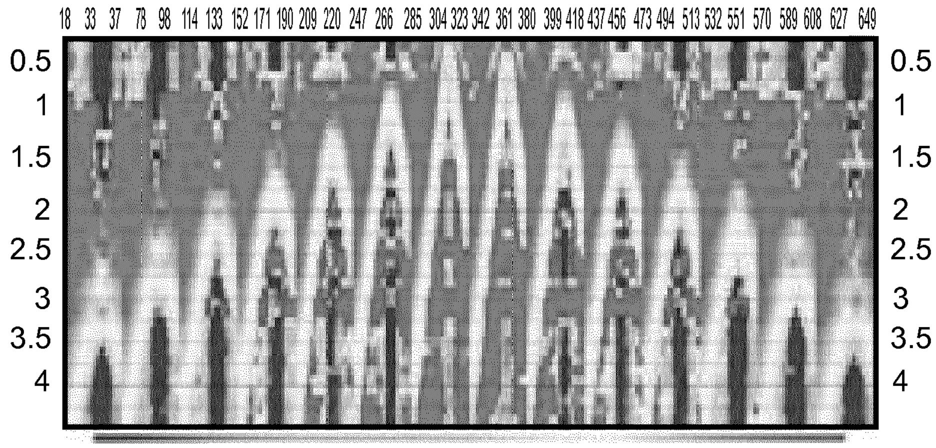

FIG. 7

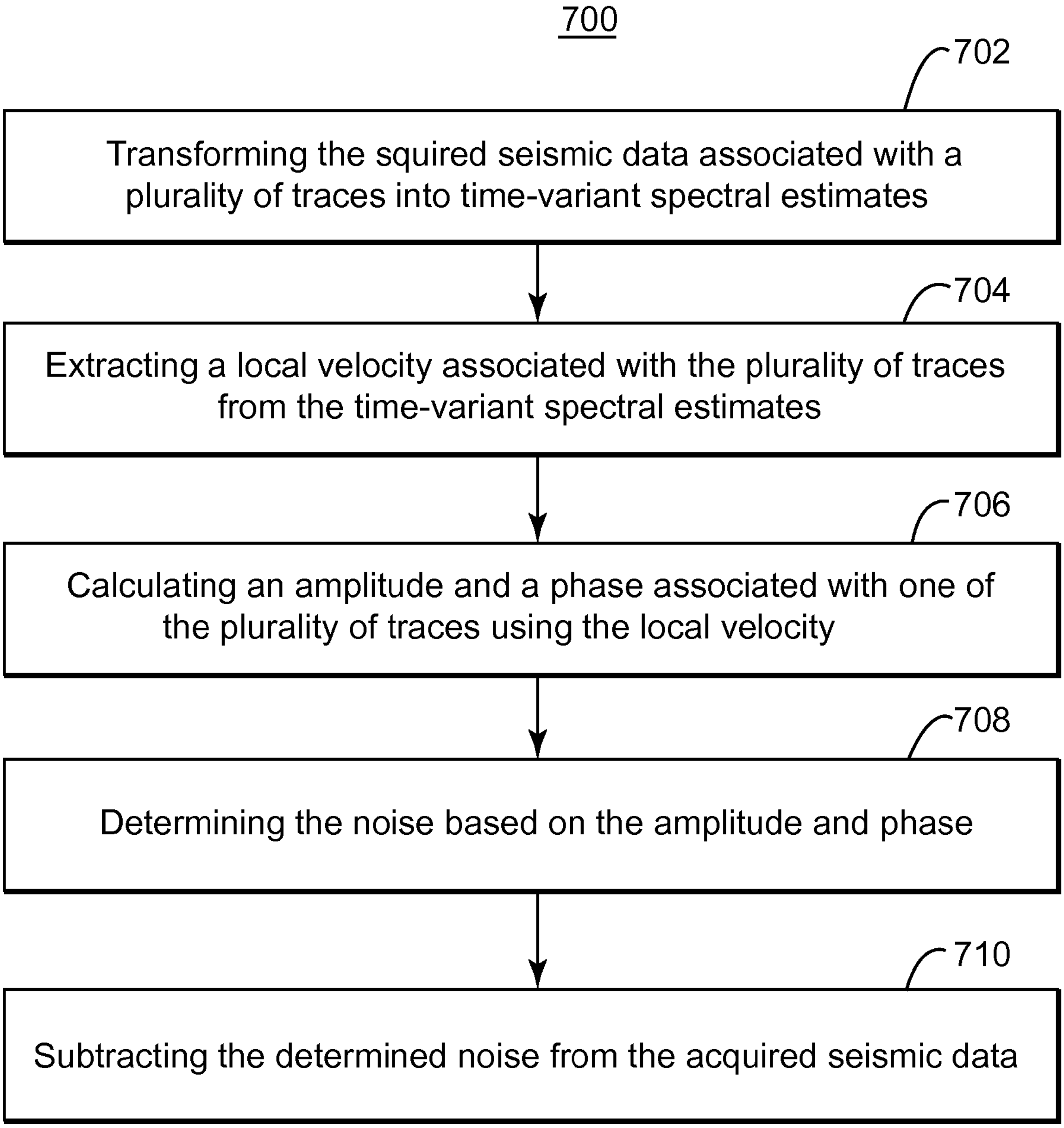
700
702
Transforming the squired seismic data associated with a plurality of traces into time-variant spectral estimates
704
Extracting a local velocity associated with the plurality of traces from the time-variant spectral estimates
706
Calculating an amplitude and a phase associated with one of the plurality of traces using the local velocity
708
Determining the noise based on the amplitude and phase
710
Subtracting the determined noise from the acquired seismic data

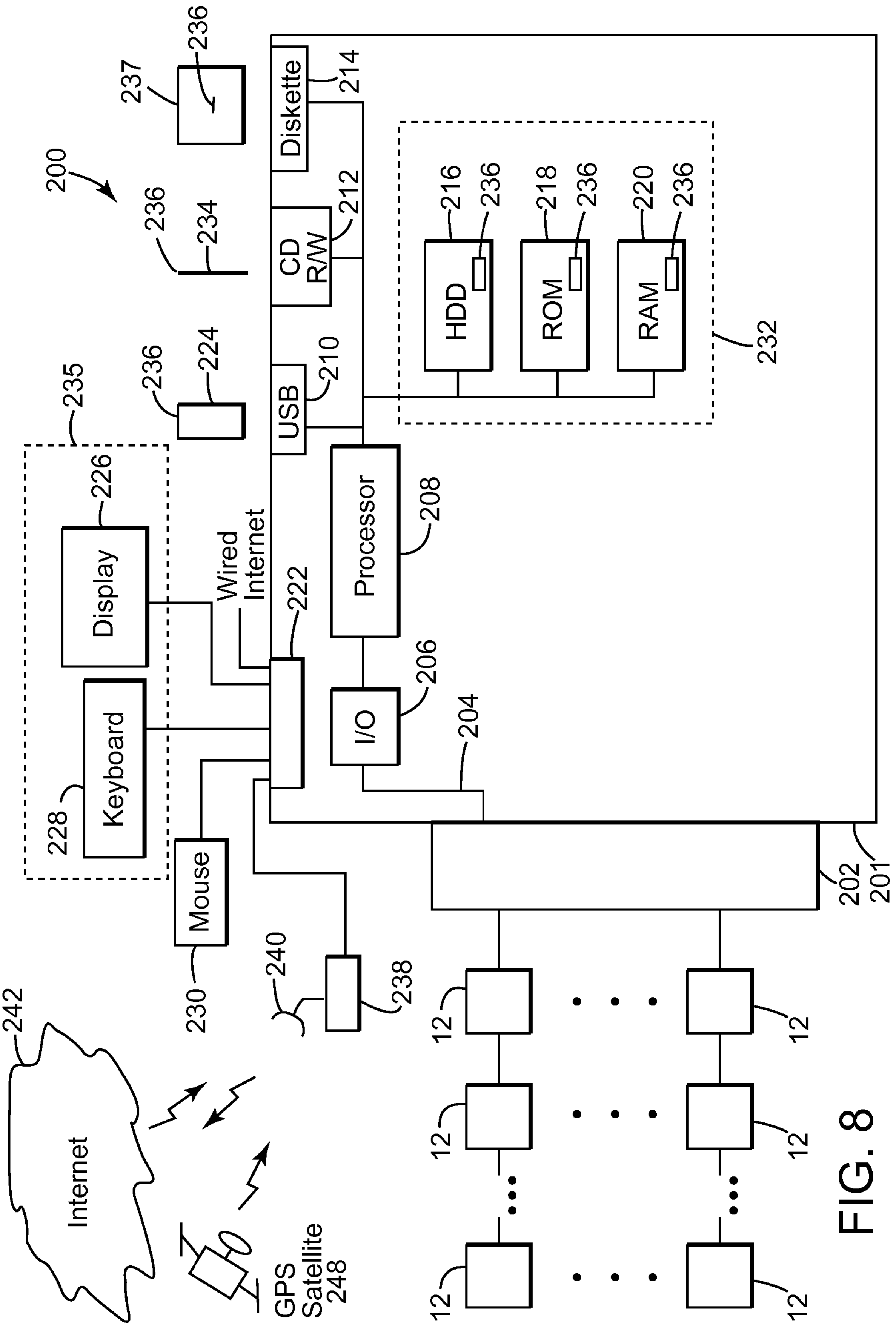
200
Diskette
214
CD R/W
212
USB
210
Processor
208
I/O
206
204
222
Wired Internet
Display
226
Keyboard
228
235
Mouse
230
224
236
234
237
HDD
216
ROM
218
RAM
220
232
202
201
238
240
Internet
242
GPS Satellite 248
12

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ROOHOLLAH ASKARI ; HAMID R. SIAHKOOHI.** Ground roll attenuation using the S and x-f-k transforms. *Geophysical Prospecting,* 2008, vol. 56, 105-114